# EUROPÄISCHE PATENTSCHRIFT

(11) **EP 1 354 688 B1**
(45) Veröffentlichungstag und Bekanntmachung des Hinweises auf die Patenterteilung: **17.09.2008**
(21) Anmeldenummer: 03008626.8
(22) Anmeldetag: 15.04.2003
(51) Int. Cl.: B29C 45/54

(54) **Spritzgiessvorrichtung mit Zwischenspeicher**
Injection moulding apparatus with interrmediate storage device
Dispositif de moulage par injection avec élément de stockage intermédiaire

(30) Priorität: 16.04.2002 DE 10216754
(43) Veröffentlichungstag der Anmeldung: 22.10.2003
(73) Patentinhaber: KraussMaffei Technologies GmbH, 80997 München (DE)
(72) Erfinder: Bürkle, Erwin, 83671 Benediktbeuern (DE); Wobbe, Hans, 82211 Herrsching (DE); Wohlrab, Walter, 91781 Weissenburg (DE)
(74) Vertreter: Zollner, Richard

(56) Entgegenhaltungen:
- WO-A-01/78964
- WO-A-02/02293
- FR-A- 1 438 470

## Beschreibung

Die Erfindung bezieht sich auf eine Spritzgießeinrichtung zum Verarbeiten von Kunststoffmaterialien gemäß dem Oberbegriff des Patentanspruchs 1.

Eine derartige Spritzgießeinrichtung ist aus der DE-PS 1 142 229 bekannt. Sie umfasst als Plastifiziereinheit einen kontinuierlich arbeitenden Extruder sowie als Einspritzeinheit eine diskontinuierlich arbeitende Kolben-Zylinder-Anordnung. Da während des Einspritzvorgangs der Einspritzeinheit kein Kunststoffmaterial zugeführt werden kann, ist zwischen dem Extruder und der Einspritzeinheit ein Druckspeicher zur Aufnahme des während des Einspritzens kontinuierlich anfallenden plastifizierten Kunststoffmaterials vorgesehen. Bei dieser Anordnung kann es auch bei kontinuierlichem Betrieb des Extruders zu Unregelmäßigkeiten in der Förderung des Kunststoffmaterials kommen, wodurch eventuell empfindliche Kunststoffmaterialien geschädigt werden können.

Ebenfalls in der eingangs genannten DE-PS 1 142 229 ist eine Anordnung mit einem kontinuierlichen Extruder diskutiert, der alternierend zwei Einspritzeinheiten beschickt. Beim Umschalten eines Ventils zwischen dem Extruder und den beiden Einspritzeinheiten kann es dabei zu kurzzeitigen Druckstößen kommen, die sich ebenfalls unvorteilhaft auf das Kunststoffmaterial auswirken können.

Aus der DE 197 15 229 A1 ist ein Verfahren und eine Vorrichtung zur Kopplung kontinuierlicher Plastifizierungen mit zyklischer, diskontinuierlicher Schmelzeaustragung bekannt. In einer Ausführungsform wird ein Schneckenpufferspeicher zur Aufnahme und Speicherung von kontinuierlich plastifiziertem und gefördertem Kunststoff vorgesehen.

Aus der gattungsbildenden WO 02/02293 A1 ist eine Spritzgießmaschine mit einem kontinuierlich arbeitenden Extruder bekannt, wobei der Extruder in einem Gehäuse reversierbar geführt ist, so dass vor dem Extruder ein Schmelzesammelraum mit variablem Volumen gebildet wird.

Demgegenüber liegt der Erfindung die Aufgabe zugrunde, eine Spritzgießeinrichtung der eingangs genannten Art so auszubilden, dass Druckstöße und Inhomogenitäten im Kunststoffmaterial weitgehend vermieden werden.

Die Lösung dieser Aufgabe erfolgt durch eine Vorrichtung mit den Merkmalen des Patentanspruchs 1; vorteilhafte Weiterentwicklungen der Erfindung sind im abhängigen Patentanspruch angegeben.

Erfindungsgemäß ist der Austragsbereich eines Extruders als Schnecken-Pufferspeicher ausgebildet. Dazu ist der Extruderzylinder im Austragsbereich im Querschnitt aufgeweitet, so dass ein großes freies Volumen zur Verfügung steht, das sich - vorzugsweise über eine Drosselstelle gesteuert - im Zyklus des Spritzvorgangs füllt bzw. leert. Dabei kann die Schnecke des Schnecken-Pufferspeichers als Fortsetzung der Extruderschnecke mit einer an den aufgeweiteten Extruderzylinder angepassten Geometrie ausgebildet sein.

Eine Ausführungsform der Erfindung wird anhand der beigefügten Zeichnungen erläutert. Es zeigen:
- Fig. 1: in schematischer Querschnittsdarstellung eine Einspritzeinheit mit einem bekannten Schneckenpufferspeicher und
- Fig. 2: den Aufbau einer Pufferzone im Austragsbereich eines Extruders.

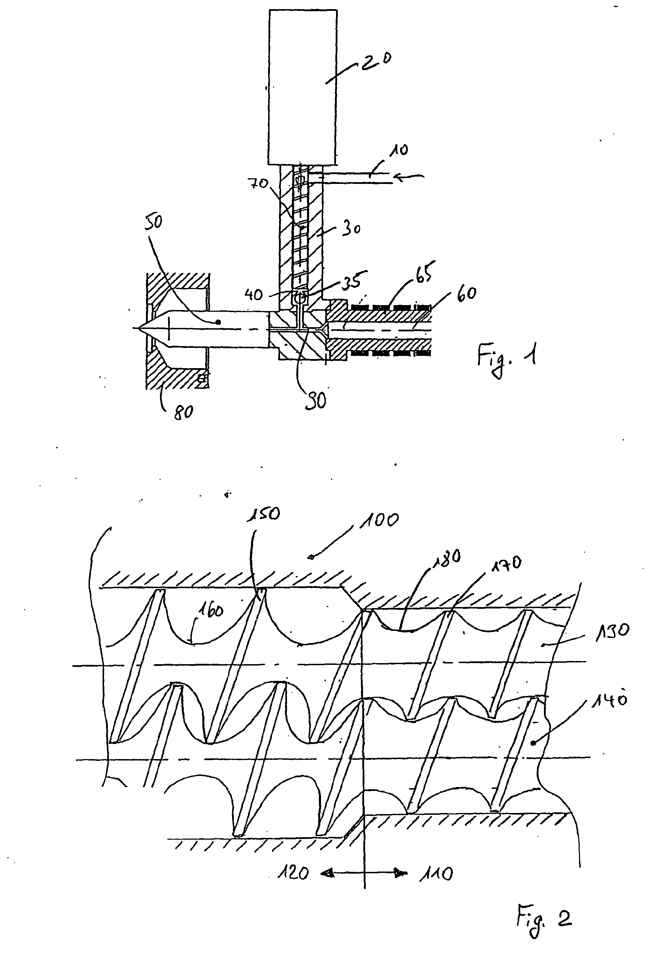

Die in Fig. 1 dargestellte Vorrichtung umfasst eine Einspritzeinheit mit einem Einspritzkolben 60 und einem Einspritzzylinder 65. Das Innere des Einspritzzylinders 65 ist über Kanäle 90 und ein Rückschlagventil 35 mit einem Schneckenpufferspeicher verbunden. Der Schneckenpufferspeicher umfasst einen Schneckenzylinder 30, in dem eine Schnecke 70 drehbar sowie entlang der Achse des Zylinders 70 verschiebbar aufgenommen ist. Des weiteren ist eine vorgespannte Zylinderkammer vorgesehen.

Über einen Verbindungskanal 10 ist das Innere des Schneckenzylinders 30 mit einem kontinuierlich arbeitenden Extruder (nicht dargestellt) verbunden.

Im Betrieb wird zunächst plastifiziertes Kunststoffmaterial über den Verbindungskanal 10 in den Schneckengang der Schnecke 70 eingeführt und durch Drehung der Schnecke 70 in Richtung auf das Rückschlagventil gefördert und gelangt über die Kanäle 90 unter Verdrängung des Kolbens 60 in das Innere des Einspritzzylinders.

Bei einem Einspritzvorgang wird der Kolben 60 angetrieben und spritzt das Kunststoffmaterial über den Einspritzkopf 50 in ein an einer Formaufspannplatte 80 angebrachtes Formwerkzeug (nicht dargestellt). Dabei blockiert das Rückschlagventil 40, so dass kein Material von der Schnecke 70 in die Kanäle 90 transportiert werden kann. Bei fortgesetzter Rotation der Schnecke 70 bildet sich deshalb vor dem Rückschlagventil 35 ein Puffer 40, der die Schnecke in Richtung auf die vorgespannte Zylinderkammer 20 verdrängt.

Sobald der Einspritzvorgang beendet ist, öffnet das Rückschlagventil 35, und die vorgespannte Zylinderkammer 20 verschiebt die Schnecke 70 in Richtung auf das Rückschlagventil, so dass der Einspritzzylinder 65 erneut gefüllt wird.

In einer erfindungsgemäßen Ausführungsform der Erfindung wird statt eines Schneckenpufferspeichers ein modifizierter Austragsbereich eines Extruders verwendet. Fig. 2 zeigt in schematischer Seitenansicht die Übergangsstelle zwischen einem Plastifizierbereich 110 und einen Austragsbereich 120 eines Extruders. Bei dem Extruder handelt es sich um einen Doppelwellenextruder, in dem in einem Schneckenzylinder 100 zwei Schnecken 130, 140 achsparallel drehbar gelagert sind. Dabei greifen Schneckenstege 170 der einen Schnecke Ausnehmungen des Schneckenkerns 180 der anderen Schnecke.

Im Plastifizierungsbereich 110 hat der Extruderzylinder 100 eine kleiner Querschnittsfläche als im Austragsbereich 120. Dementsprechend sind im Bereich 110 die Schneckengänge 180 weniger tief ausgebildet als die Schneckengänge 160 im Austragsbereich 120, und die Schneckenstege 170 im Plastifizierungsbereich haben eine geringere Höhe als die Schneckenstege 150 im Austragsbereich. Auf diese Weise ist der Extruder im Austragsbereich als Speicher ausgebildet, wobei auf Grund der Geometrie von Austragsschnecke und Zylinder ein großes freies Volumen zur Verfügung gestellt wird, welches sich - über eine Drosselstelle gesteuert - im Zyklus des Spritzvorgangs füllt bzw. leert.

## Patentansprüche

1. Spritzgießeinrichtung mit einem kontinuierlich arbeitenden Extruder und einer diskontinuierlich arbeitenden Einspritzeinheit (60, 65), wobei
ein Zwischenspeicher im Austragsbereich (120) des Extruders ausgebildet ist, und zwar als Fortsetzung des Extruderzylinders (10, 100) und mit größerer Querschnittsfläche als der Querschnittsfläche des Extruderzylinders in einem Plastifizierbereich (110), **dadurch gekennzeichnet, dass** in dem Zwischenspeicher mindestens eine Schnecke vorgesehen ist, die als Fortsetzung mindestens einer Extruderschnecke (130, 140) und mit größerem Außenquerschnitt als die Extruderschnecke im Plastifizierbereich (110) ausgebildet ist.

2. Spritzgießeinrichtung nach Anspruch 1,
**dadurch gekennzeichnet,**
**dass** es sich bei dem Extruder um einen Doppelwellenextruder handelt, in dem in einem Schneckenzylinder (100) zwei Schnecken (130, 140) achsparallel drehbar gelagert sind, wobei im Plastifizierzungsbereich (110) die Schneckengänge (180) weniger tief ausgebildet sind als die Schneckengänge (160) im Austragsbereich.

## Claims

1. An injection moulding device with a continuously operating extruder and with a discontinuously operating injection unit (60, 65), in which an intermediate storage arrangement is formed in the discharge region (120) of the extruder, and namely as an extension of the extruder cylinder (10, 100) and with a greater cross-section area than the cross-section area of the extruder cylinder in a plasticizing region (110),
**characterized in that**
in the intermediate storage arrangement at least one screw is provided which is formed as an extension at least of one extruder screw (130, 140) and with a greater external cross-section than the extruder screw in the plasticizing region (110).

2. The injection moulding device according to Claim 1,
**characterized in that**
the extruder is a double-shaft extruder, in which in one screw cylinder (100) two screws (130, 140) are mounted so as to be rotatable in a paraxial manner, in which in the plasticizing region (110) the spirals (180) are formed to be less deep than the spirals (160) in the discharge region.

## Revendications

1. Dispositif de moulage par injection avec une extrudeuse fonctionnant en continu et une unité d'injection
fonctionnant en discontinu (60, 65),
un accumulateur intermédiaire étant réalisé dans la zone d'extraction (120) de l'extrudeuse, à savoir dans le prolongement du cylindre d'extrudeuse (10, 100) et avec une surface de section transversale supérieure à la surface de section transversale du cylindre d'extrudeuse dans une zone de plastification (110), **caractérisé en ce que** dans l'accumulateur intermédiaire, il est prévu au moins une vis sans fin, qui est réalisée en tant que prolongement d'au moins une vis sans fin d'extrudeuse (130, 140) et avec une section transversale extérieure supérieure à celle de la vis sans fin d'extrudeuse dans la zone de plastification (110).

2. Dispositif de moulage par injection selon la
revendication 1, **caractérisé en ce que**,
en ce qui concerne l'extrudeuse, il s'agit d'une extrudeuse à deux arbres, dans laquelle dans un cylindre pour vis sans fin (100) deux vis sans fin (130, 140) sont logées de façon rotative parallèlement à l'axe, dans la zone de plastification, les spires de la vis sans fin (180) étant réalisées avec une profondeur moindre à celle des spires de la vis sans fin (160) dans la zone d'extraction.
